# EUROPEAN PATENT SPECIFICATION

(11) **EP 3 166 889 B1**
(45) Date of publication and mention of the grant of the patent: **05.01.2022**
(21) Application number: 15763488.2
(22) Date of filing: 09.07.2015
(51) Int. Cl.: C02F 1/32, C02F 1/72, B01F 5/00, B01F 5/02, B01F 3/08, C02F 1/00, C02F 1/78

(54) **HYDRODYNAMICALLY-ENHANCED UV PHOTO-OXIDATION OF CONTAMINATED LIQUIDS**
HYDRODYNAMISCH VERBESSERTE UV-PHOTOOXIDATION VON VERUNREINIGTEN FLÜSSIGKEITEN
UV-PHOTOOXYDATION DE LIQUIDES CONTAMINÉS RENFORCÉE HYDRODYNAMIQUEMENT

(30) Priority: 09.07.2014 NL 2013157
(43) Date of publication of application: 17.05.2017
(73) Proprietor: Ton Van Remmen Beheer B.V., 8131 TE Wijhe (NL)
(72) Inventor: VAN REMMEN, Antonius Maria, 8131 TE Wijhe (NL); GROOT KORMELINCK, Kaspar, 8131 TE Wijhe (NL)
(74) Representative: De Vries & Metman
(86) International application number: PCT/EP2015/001395
(87) International publication number: WO 2016/005052

(56) References cited:
- US-A- 6 156 211
- US-A1- 2004 045 886
- None

## Description

### Field of the invention

The invention relates to hydrodynamically-enhanced photo-oxidation of contaminated liquids, and, in particular, to a system for hydrodynamically-enhanced UV photo-oxidation of contaminated liquids.

### Background of the invention

Nowadays contaminated water originating from domestic residences and/or industry (e.g. the pharmaceutical industry, hospitals, farming, etc.) requires removal of the contaminants before it can be re-used or released to open water. Typically, the contaminants are organic and/or inorganic micro-impurities and the removal of these impurities from the water is based on an oxidation reaction wherein an oxidation agent, e.g. Hydrogen peroxide is homolytically cleaved into OH-radicals and these are used to oxidize impurities in the stream. Other reagents like Ozone can also be used. This process is commonly referred to as advanced oxidation in the industry and is used by many, in different ways, mainly for water treatment. Preferably fast and efficient full oxidation of the impurities is desired.

Radicals typically react orders of magnitudes faster with contaminants than chemical oxidants such as ozone and hydrogen peroxides alone, without UV activation. These radicals may be generated by a catalyst like titanium oxide or combining UV light with hydrogen peroxide or ozone. In some cases these reactions may be improved using a suitable catalyst such as in the Fenton reaction wherein OH radicals may be generated on the basis of hydrogen peroxide in combination with iron II/III ions.

The OH radical reacts non-selectively with every impurity that can be oxidized it encounters and its lifetime is therefore very short. Known systems for UV photo-oxidation solve this problem by using relatively high concentrations of hydrogen peroxide in combination with high doses of UV light, to create as many radicals as quickly as possible in the water stream. Typically these high UV doses are achieved by high-power, medium, low or high-pressure UV sources.

For example, US2011/0318237 describes an UV photo-oxidation reactor wherein the contaminated influent and hydrogen peroxide are led into a reaction chamber that comprises one or more UV lamps for generating OH radicals so that contaminants in the reaction chamber are oxidized. The reactor volume is divided in a plurality of segmented baffles in order to increase radial mixing. Despite the claims in this document, the baffles inevitably create dead spaces where the liquid does not flow thereby reducing the total effective volume of the reactor. Further, the baffles will cause shadowing effects reducing the UV exposure of the liquid.

Hence, although some improvement in mixing of the oxidation agent in the liquid will be achieved, the baffles will also have a detrimental effect on the oxidation efficiency. Additionally, the baffles will form substantial flow impedance for the pumping system so that substantially more pumping power is required in order to maintain a certain flow through the reactor when compared with the situation without baffles. A further photo-oxidation system is closed in US 2004/045886 A1.

Hence, there is a need in the art for improved systems for UV photo-oxidation of contaminated liquids. In particular, there is a need in the art for systems for UV photo-oxidation of contaminated liquids that allows efficient oxidation of contaminants in the water using UV-generated radicals.

### Summary of the invention

It is an objective of the invention to reduce or eliminate at least one of the drawbacks known in the prior art. In an aspect the invention may relate to an UV photo-oxidation system for a contaminated fluid. A photo-oxidation system according to the invention is provided in independent apparatus claim 1 which comprises the essential features of the invention. Further preferred embodiments are described in dependent claims 2-9. In an aspect, the system may comprise: a housing, preferably a cylindrical housing, for receiving a flow of a contaminated fluid, said housing comprising a fluid inlet and a fluid outlet; one or more (tubular) UV light sources, preferably one more low pressure UV light sources, mounted in said housing; and, one or more hydrodynamic mixer elements for turbulent mixing of a UV-activatable oxidation agent with the contaminants in the fluid during exposure of the mixture to said UV light.

Hence, the system according to the invention uses as set of hydrodynamic mixer elements that generate a turbulent flow along the length of the tubular UV light sources so that optimal exposure of the mixture of a UV-activatable oxidation agent and the contaminants to an UV dosage can be ensured. Turbulent mixing of the oxidation agent with the contaminants by the hydrodynamic mixer elements substantially increases the chances that the reagents form UV-activated oxidants (radicals) and that these oxidants react with contaminants, while eliminating the detrimental effects that are present when using static mixer elements, e.g. baffles, that are known in the prior art.

The spray nozzles may have relatively small dimensions thereby causing no detrimental dead shadowing effects. Further, the spray nozzles do not impede the net flow of the contaminated liquid from the inlet to the outlet. Hence, less pumping power is required in order to maintain a particular flow rate through the reactor tank.

The invention allows the use of low-pressure high, efficiency UV light sources in combination with reduced concentrations of the oxidation agent in the contaminated water without compromising the oxidation rate of the contaminants. This way, the operations costs related to the oxidation process can be substantially reduced.

A further advantage of the hydrodynamic mixing elements is that the (high pressure) liquid jets produced by the dynamic mixing elements may prevent or at least significantly reduce the deposition of contaminants on the outer surface of the tubular quartz tubes of the UV light assemblies. Normally, over time a layer of contaminants may be formed on the outer surface of the quartz tubes. This layer may absorb a significant portion of the UV light thereby preventing optimal UV exposure of the UV-activatable oxidation agent.

In an embodiment, a hydrodynamic mixer element may comprise a movable and/or rotatable spray head, wherein said spray head is moving and/or rotating when liquid is pumped under pressure through outlets of said spray head. Hence, the pressure of the liquid that is pumped through the mixer element causes the spray head to move and/or rotate while liquid is ejected as jets out of the spray head thereby causing turbulent flow in the UV reactor.

In an embodiment, a hydrodynamic mixer element may comprise at least one spray head rotatably and/or movable mounted on a holder, wherein said spray head may comprise one or more fluid outlets that are arranged with respect to the rotating axis and/or moving axis of said spray head such that when liquid is pumped with pressure through said one or more fluid outlets the spray head will start rotating and/or moving with respect to its rotating and/or moving axis respectively.

The longitudinal axis of at least part of said one or more UV light sources is substantially parallel to the longitudinal axis of said housing. Hence, long tubular UV light sources may be oriented in the longitudinal direction of the UV reactor so that homogenous UV exposure along the full length of the reactor is ensured.

In an embodiment, UV light sources may be mounted in the housing such that the longitudinal axis of at least part of said UV light sources are located in one or more planes substantially normal to the longitudinal axis of said housing. Hence, in this embodiment, in a cylindrical UV reactor multiple tubular UV light sources may be mounted such that the longitudinal axis of the light source are located in planes perpendicular to the longitudinal axis of the UV reactor. Preferably, the longitudinal axis of a light source may coincide with the diameter of the cylindrical cross-section of the UV reactor.

In an embodiment, said spray nozzles may be connected to a pumping system for pumping at least part of said UV-activatable oxidation agent and/or contaminated fluid through said spray nozzles into said housing. Hence, in this embodiment, the hydrodynamic mixing elements may be both used for generating a turbulent flow along the length of the UV lights and as injection points of the oxidation agent and/or (recirculated) contaminated liquid in the reactor tank.

In an embodiment, at least part of said one or more hydrodynamic mixer elements may be configured to release one or more liquid jets under high-pressure in the direction towards said one or more UV light sources. Hence, by controlling the orientation of the mixer elements, at least part of the high pressure liquid jets of the mixer elements may be directed towards the UV lamps. This way, turbulent mixing is ensured in the areas close to the UV lamps. Further, the (high pressure) liquid jets produced by the dynamic mixing elements may prevent or at least significantly reduce the deposition of contaminants on the outer surface of the tubular quartz tubes of the UV light assemblies.

In an embodiment, said housing may further comprise a recirculation outlet, said outlet being connected via a recirculation system to said inlet and/or at least part of said one or more mixer elements for recirculating at least part of the liquid into said housing. Hence, part of the liquid in the UV reactor may be re-inserted via the hydrodynamic mixer elements into the housing of the UV reactor.

In a further aspect, the disclosure may relate to the use of one or more hydrodynamic mixer elements in an UV photo-oxidation system for a contaminated fluid. In an aspect, said system may comprise a housing comprising at least one fluid inlet, at least one fluid outlet, one or more (tubular) UV light sources and one or more hydrodynamic mixer elements, wherein said one or more hydrodynamic mixer elements are configured for turbulent mixing of a UV-activatable oxidation agent with the contaminates in the fluid during exposure of the mixture to said UV light.

In another aspect, the disclosure may relate to a method for UV photo-oxidation of a contaminated fluid comprising: pumping a contaminated fluid a housing comprising a fluid inlet and a fluid outlet, said housing comprising one or more (tubular) UV light sources, preferably one more low pressure UV light sources; and, pumping UV-activatable oxidation agent and/or contaminated fluid through one or more hydrodynamic mixer elements mounted in said housing, said one or more hydrodynamic mixers being configured for turbulent mixing of said UV-activatable oxidation agent in said fluid with the contaminants during exposure to said UV light.

In a further aspect, the disclosure may relate to an UV photo-oxidation system for oxidizing contaminates in a contaminated fluid on the basis of hydrogen peroxide comprising: a housing, preferably a cylindrical housing, for containing a contaminated fluid, said housing comprising at least one inlet and at least one outlet; one or more tube-shaped UV light sources mounted in said housing; an oxidation agent release system for mixing hydrogen peroxide with the contaminated liquid before the liquid is injected into the housing via said at least one inlet; a pumping system connected to said at least one inlet, said inlet comprising one or more nozzles for injecting the mixture of hydrogen peroxide and the contaminated fluid under pressure into the reactor in order to exposure the mixture to said UV light.

The invention aims to provide optimal and efficient oxidation, preferably full oxidation, of contaminants using hydrogen peroxide and UV light. By controlled injecting a mixture of a contaminated fluid and hydrogen peroxide from one base side into the cylindrical housing, flow patterns can be generated in the housing which provide optimal exposure to UV light.

In an embodiment, at least one of said one or more nozzles comprises a spray head, preferably said spray head being configured to move and/or rotate when liquid is pumped under pressure out of said spray head.

The longitudinal axis of said tube-shaped UV light sources are substantially parallel to the longitudinal axis of said cylindrical housing.

In an embodiment, at least part of said one or more nozzles are configured to release one or more liquid jets or spray jets under high-pressure in the direction towards at least part of said one or more UV light sources.

In an embodiment, said system further comprises a recirculation system for re-injecting at least part of the liquid leaving the outlet of said housing into said housing, said recirculation system being connected to said inlet and/or at least part of said one or more nozzles for re-injecting at least part of the liquid into said housing.

In an embodiment, said one or more nozzles are configured to inject at least part of said liquid as one or more (turbulent) liquid jets or sprays in said housing.

The housing comprises a cylindrical body, a first base side and a second base side, said at least one inlet being located on or close to the centre of the first base side, wherein, when in use, said nozzles are configured to inject the fluid with force in the reactor in a direction towards the second base side; said at least one outlet being located at said first base side.

A first set of said UV light sources are mounted close to the longitudinal axis of said housing and a second set of said UV sources are mounted away from said longitudinal axis, wherein, when in use, said first set of said UV light sources forming a first region in said housing of a first average UV light intensity and said second set of said UV light sources forming a second region of a second average UV light intensity around said first region of said first average UV light intensity, preferably said first average UV light intensity in said first region being higher than said second average UV light intensity in said second region.

In an embodiment, when in use, said pumping system and said nozzles are configured to generate: a first flow volume in said first region and a second flow volume in said second region, the average flow direction in said first flow volume being towards said second base side, parallel to the longitudinal axis of said housing; and, the average flow direction in said second flow area being towards said first base side.

In an embodiment, said pumping system and said nozzles are configured to produce an average first flow rate in said first flow volume that larger than the average second flow rate in said second flow volume; and/or, said pumping system and said nozzles are configured to produce vortices in said second flow volume.

Hence, by controlled injecting a mixture of a contaminated fluid and hydrogen peroxide from one base side into the cylindrical housing, flow patterns can be generated in the housing which provide optimal exposure to UV light. The photo-reactor design allows simple optimization for different sizes and thus provides a solution that is scalable. Reactors of different sizes can be realized while maintaining its advantageous properties. Nozzles located on or close to centre of the first base for injecting the fluid with force in the reactor can be used to generate an advantageous flow pattern for photo-oxidation on the basis of hydrogen peroxide within the reactor without the use of baffles or the like. The design further provides the advantages that both the inlet, the outlet and the UV light sources are accessible at one base side of the reactor tank. This allows efficient arrangement of multiple tanks for example in case multiple tanks need to be aligned connected in series.

In an embodiment, the ratio between the diameter of said first and second base side and longitudinal length of said cylindrical body may be selected between 1:1,2 and 1:3.

The disclosure may relate to a use of one or more nozzles in an UV photo-oxidation system for a contaminated fluid, said system comprising: a cylindrical housing having a first and second basis side, at least one fluid inlet, a fluid outlet, one or more tube-shaped UV light sources, an oxidation agent release system for mixing hydrogen peroxide with the contaminated liquid before the liquid is injected into the housing via said at least one inlet; and a pumping system connected to said at least one inlet, wherein said one or more nozzles are connected to said at least one fluid inlet for injecting the mixture of hydrogen peroxide and the contaminated fluid under pressure into the reactor in order to exposure the mixture to said UV light.

The invention will be further illustrated with reference to the attached drawings, which schematically will show embodiments according to the invention. It will be understood that the invention is not in any way restricted to these specific embodiments.

### Brief description of the drawings

**Fig. 1** depicts a schematic of a UV photo-oxidation system according to the disclosure.
**Fig. 2A** and **2B** depict schematics of a UV photo-oxidation system according to the disclosure.
**Fig. 3** depicts a schematic of a UV photo-oxidation system according to the disclosure.
**Fig. 4A** and **4B** depict schematics of hydrodynamic mixers for use in UV photo-oxidation system according to the disclosure.
**Fig. 5A** and **5B** depicts a schematic of a UV photo-oxidation system according to the invention.

### Detailed description

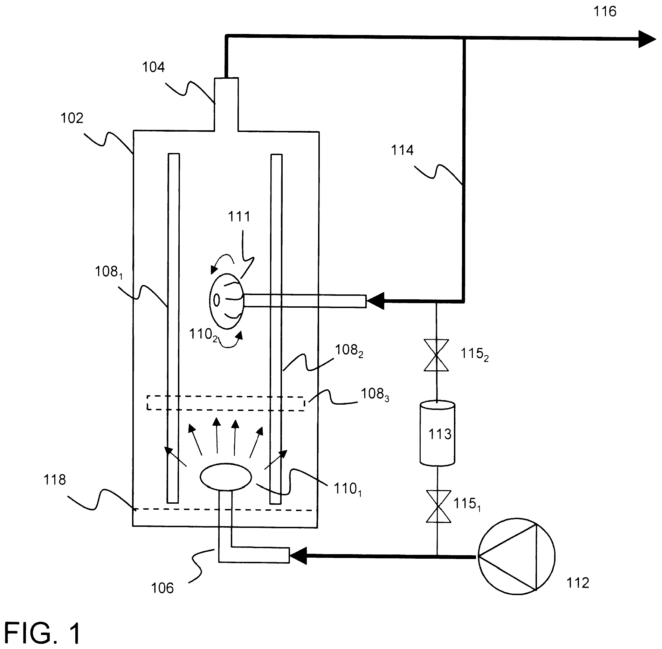

Fig 1-4B are not according to the invention, therefore all aspects which are referred to as embodiments in the following paragraphs concerning said figures are to be understood as aspects not according to the invention. **Fig. 1** depicts schematics of an UV photo-oxidation system. In particular, **Fig. 1** depicts a longitudinal cross-section of an UV photo-oxidation reactor tank **102** comprising at least one liquid inlet **106** and a liquid outlet **104.** In an embodiment, the reactor tank may have a longitudinal (cylindrical) shape in which one more (tubular) UV lamp assemblies **108₁₋₃** may be mounted. A light assembly may comprise a longitudinal quartz tube forming a watertight housing for a longitudinal (tubular) shaped UV lamp. The light assembly may be mounted into the reactor tank such that the UV lamp may be accessed and replaced without opening the reactor tank. In an embodiment,, one or more light assemblies **108_{1,2}** may be mounted so that the longitudinal axis of the reactor tank is substantially parallel to the longitudinal axis of the UV lamp assemblies. Alternatively and/or in addition, in another embodiment, one or more light assemblies **108₃** may be mounted in the radial direction (i.e. the direction in a plane perpendicular to the longitudinal axis of the reactor tank.

A pumping system **114** may pump the untreated fluid under pressure via a pipe system to the main inlet. In an embodiment, an oxidation agent release system **113** may be connected via a controllable valve **115** to the pipe system in order to controllably release a predetermined amount of oxidation agent into the UV reactor.

In an embodiment, the main inlet may comprise one or more mixer elements **110₁** for hydrodynamic mixing of the contaminated fluid and the oxidation agent. The mixer element may comprises one or more nozzles may be configured so that the untreated pressurized feed stream enters the reactor as water jets causing a turbulent and/or chaotic flow of the fluid in the reactor thus optimizing the contact chances of the contaminants of the untreated water and the added oxidation agent, e.g. hydrogen peroxide, with the UV-lights in the reactor.

Hence, a turbulent main flow may be generated by mixer elements **110_{1,2}** that may be mounted within the reactor tank in order to generate a turbulent flow of a mixture of the contaminated water and an oxidation agent. The treated fluid may exit the UV reactor via the outlet. Part of the pipe system connected to the outlet may be configured as a recirculation system **114,** which leads part of the treated fluid back into the UV reactor for a further oxidation treatment.

The recirculation system may inject part of the treated fluid into the UV reactor using one or more further hydrodynamic mixer elements **110₂.**

As will be described hereunder in more detail, in an embodiment, a hydrodynamic mixer element **110₂** may comprise at least one spray head rotatably and/or movable mounted on a holder, wherein the spray head may comprise one or more fluid outlets **111** that are arranged with respect to the rotating axis and/or moving axis of said spray head such that when liquid is pumped under high-pressure through said one or more fluid outlets the spray head will start rotating and/or moving with respect to its rotating and/or moving axis respectively.

In an embodiment, an UV-activatable oxidation agent (or at least part there of oxidations) such as ozone and/or hydrogen peroxide may be mixed with the contaminated liquid before the liquid enters the reactor tank via the inlet. Alternatively and/or additionally, in another embodiment, at least part of the oxidation agent may be injected via the one or more further hydrodynamical mixer elements into the reactor tank. To that end the oxidation agent supply system **115** may supply the oxidation agent via the pump system to at least part of the hydrodynamic mixer element.

One or more values **111₁₋₅**, preferably electronically controllable values, associated with the hydrodynamic mixer elements may be configured for (electronically) controlling the average concentration of the oxidation agent along the length of the reactor tank. In an embodiment, the valves **111** may be configured such that the average concentration of the oxidation agent in the reactor tank is constant.

In an embodiment, the reactor tank comprises a further outlet **116** for controllably recirculating part of the fluid in the reactor tank back to the main inlet **106** and/or the hydrodynamical mixer units **110₁₋₅.**

Hence, in contrast to known UV photo-oxidation systems, the mixing elements are configured as hydrodynamical mixing elements comprising moving and/or rotating spray heads for generating a turbulent flow along the length of the tubular UV light sources so that optimal exposure of the mixture of a UV-activatable oxidation agent and the contaminants to an UV dosage can be ensured..

Hence, one or more hydrodynamical mixer elements, in particular one or more high-pressure spray heads may be used to create a turbulent flow in the UV reactor. Some of the high-pressure spray heads may be configured as a self-driving moving and/or rotating spray head comprising a plurality of outlets that have an angle with respect to the axis of rotation of the spray head. The high pressure will cause the spray head to rotate when the liquid exits the spray head thereby causing turbulent mixing of the oxidation agent and the contaminants in the liquid. Multiple hydrodynamical mixer elements may be mounted at different orientations along the length of the reactor tank.

Further, in contrast with known UV photo-oxidation system, the hydrodynamical mixer elements are relatively small so that shadowing effects, i.e. reduced UV exposure of the oxidation agent due to the physical presence of the mixer elements in the reactor tank, are substantially eliminated. Furthermore, the hydrodynamical mixer elements do not form a substantial flow impedance for the nett flow of the contaminated liquid from the inlet to the outlet. Hence, less pumping power is required in order to maintain a particular flow rate through the reactor tank.

A further advantage of the hydrodynamic mixer elements of **Fig. 1** is that the high-pressure liquid jets may prevent or at least significantly reduce the deposition of contaminants on the outer surface of the tubular quarts tubes of the UV light assemblies. Normally, over time a layer of contaminants may be formed on the outer surface of the quarts tubes. This layer may absorb a significant portion of the UV light thereby preventing optimal UV exposure of the UV-activatable oxidation agent.

The UV reactor in **Fig. 1** may have a length selected between 0,5 and 2 meter and a cross-sectional diameter selected between 0,3 and 1 meter. Any type of UV light source may be used, including high, medium or low-pressure UV sources. The invention allows the use of low power, e.g. 200-500 Watt (low pressure) UV light sources in combination with reduced concentrations of the oxidation agent in the contaminated water without compromising the oxidation rate of the contaminants. This way, the operations costs related to the oxidation process can be substantially reduced.

In the embodiments above, the contaminated fluid is mixed with the oxidation agent while exposing the mixture to UV light. The UV reactors according to the invention may however - in another embodiment - also be used as spray UV photo-oxidation reactor. To that end, the one or more hydrodynamic mixer elements **110₁** of the main inlet may inject the contaminated liquids as spray of fine droplets in the UV reactor. The one or more hydrodynamic mixer elements may be configured to turbulently spray the contaminated in small droplets up into the UV reactor. Thereafter, the small droplets will condense and the treated liquid **118** is collected on the bottom of UV reactor. An outlet at the bottom of the UV reactor (not shown) may be used to remove treated liquid from the reactor. Part of the treated liquid may be re-inserted into the UV reactor via the one or more hydrodynamic mixer elements (in a similar was as described with reference to the recirculation system **114).** Obviously, also in case of the spray UV photo-oxidation reactor, multiple mixer elements may be used to inject the contaminated liquid as a fine spray into the reactor. This embodiment may be particular advantageous in case of low transmission contaminated liquids.

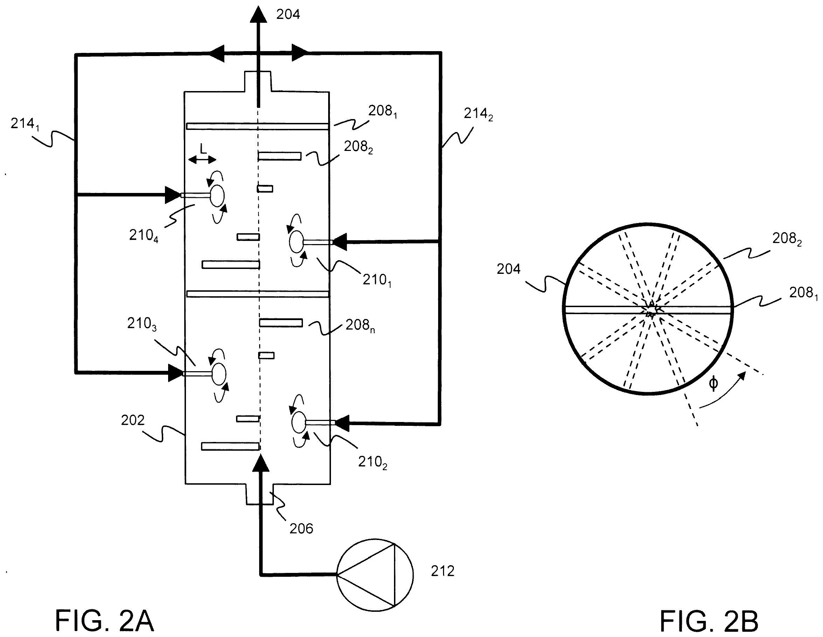

**Fig. 2A and 2b** depict schematics of a UV photo-oxidation system according to another aspect. In particular, **Fig. 2A** depicts a longitudinal cross-section of (part of) a UV photo-oxidation system comprising a reactor tank **202** comprising at least one inlet **206** and an outlet **204.** In this particular embodiments, the UV light assemblies **208₁₋ₙ** in the system of **Fig. 2** are mounted in the tank such that the longitudinal axis of the UV light assemblies lie in a plane that is substantially normal to the longitudinal axis of the (cylindrical) reactor tank. In order to generate a substantially homogenous UV light exposure along the length of the tank, the longitudinal axis of the UV light assemblies may be mounted in the planes normal to the longitudinal axis at different angles φ as shown in **Fig. 2B** which depicts a radial cross-section of the reactor tank.

The reactor tank design of **Fig. 2A and 2B** is particularly suitable for reactor tanks with a relatively large diameter (e.g. 0,5-2 meter).

Further, in order create a turbulent flow in the reactor tank, multiple moving and/or rotating spray nozzles **210₁₋₄** may be mounted in the tank in a similar way as described in detail with reference to **Fig. 1****.** In an embodiment, different nozzle heads may extend over different lengths L into the UV reactor. In this particular embodiment, the contaminated liquid may be pumped via the inlet directly into the UV reactor. At least part of the liquid that leaves UV reactor at the outlet **204** is re-injected into the UV reactor via a recirculation system **214_{1,2}.** One or more hydrodynamic mixer elements may be used to re-inject the treated fluid into the UV chamber. At least part of the hydrodynamic mixer elements may be configured as (moving and/or rotating) spray nozzles as described in detail with reference to **Fig. 1****.**

The embodiment in **Fig. 2A** comprises different turbulent mixer sources that are equally/homogenously divided over the full volume of the reactor tank. This way, all advantages associated with the UV-reactor of **Fig. 1** can also be achieved in reactor tanks with larger diameters. Hence, UV photo-oxidation reactor according to the invention can be scaled up to a large sized, high throughput photo-oxidations system.

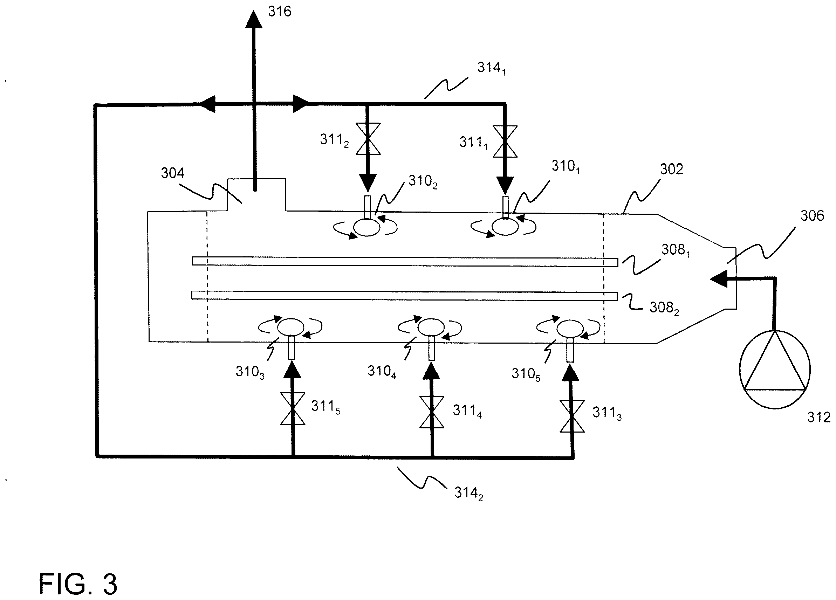

**Fig. 3** depicts a schematic of a UV photo-oxidation system according to yet another aspect. In this embodiment, one or more tubular UV light sources **308_{1,2}** may be mounted in (e.g. cylindrical) UV reactor **302** wherein the longitudinal axis of the UV light sources may be parallel to the longitudinal axis of the UV reactor. A pump system **312** may pump the contaminated water under a certain pressure via main inlet **306** into the UV reactor. In an embodiment (not shown), the main inlet may comprise one or more dynamic mixer elements in a similar way as described with reference to **Fig. 1****.** Treated liquid may leave the UV reactor via an outlet **304** and part of the treated liquid may be re-injected into the UV reactor via a recirculation system **314_{1,2}.** Re-injection of the liquid may be realized on the basis of a plurality of hydrodynamical mixer elements **310₁₋₅** in order to create a turbulent flow along the full length of the UV light sources. Local control valves **311₁₋₅** may be used in order to control the flow of the liquid through the mixer elements.

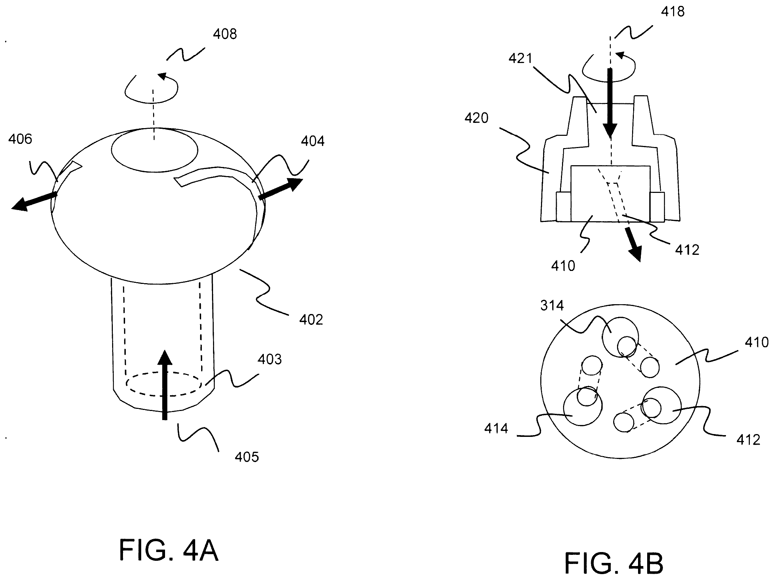

**Fig. 4A** and **4B** depict schematics of hydrodynamical mixer elements that may be used in UV photo-oxidation system according to an aspect. **Fig. 4A** depicts a mixer element that is known from US8078533 and illustrates a spherical spray head **402** rotatably mounted on a holder **403.** The holder may comprise a fluid inlet 305 that is communication with one or more outlets **404,406** in the spray had. The outlets may be arranged with respect to the rotating axis **408** such that when liquid is pumped with high pressure via the inlet to the outlets the spray head will start rotating by the release of the force of the escaping liquid.

Similarly, **Fig. 4B** is depicts a spray nozzle that is known from US2014/0042245 and illustrates a disc-shaped spray head **410** rotatably mounted in a holder **420.** The holder comprises a fluid inlet **421** that is in communication with one or more outlets **412-316.** The one or more outlets may are arrange with respect to the rotating axis **418** such that when liquid is pumped with high pressure via the liquid inlet to the outlets, the disc-shaped spray head will start rotating by the force of the release of the liquid.

It is submitted that the hydrodynamical mixer elements of **Fig. 4A** and **4B** only serve as examples and other designs may also be used as long as the spray heads allows hydrodynamical mixing of the contaminated liquid and the oxidation agent during exposure to UV light. In particular, in this application, the term hydrodynamical mixer element refers to any mixer element that is configured to generate a turbulent liquid flow or spray. A mixer element may comprise one or more fluid nozzles, including but not limited to single-fluid nozzles, such as a plain-orifice nozzle, a shaped-orifice nozzle, a surface-impingement single-fluid nozzle, a pressure-swirl single-fluid spray nozzle, a solid-cone single-fluid nozzle or a compound nozzle. Alternately and/or additionally a mixer element may comprise one or more two-fluid nozzles such as an internal-mix two-fluid nozzle or an external-mix two-fluid nozzle.

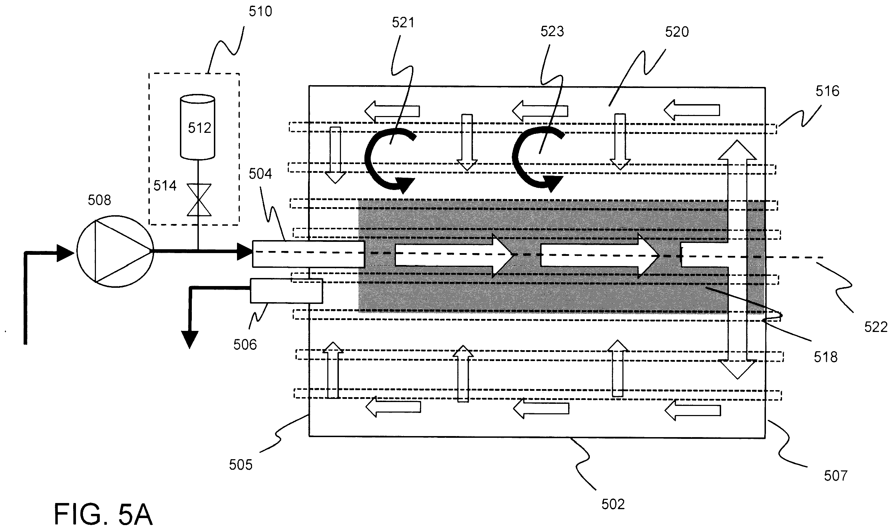

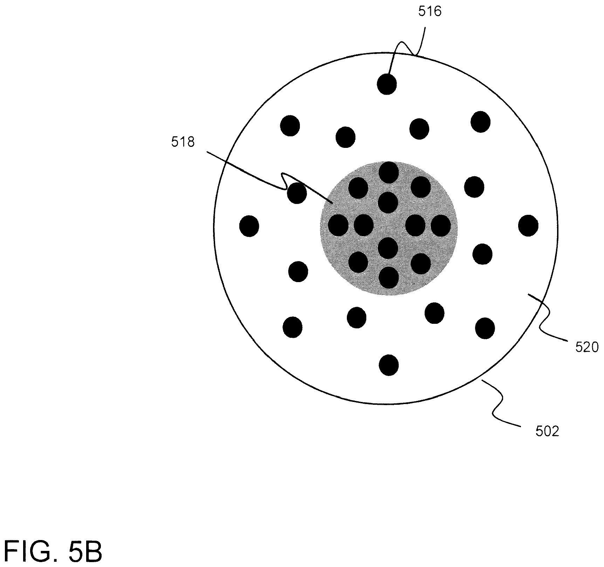

**Fig. 5A** and **5B** depicts a longitudinal and radial cross-section of an UV photo-oxidation reactor tank according to the invention. In particular, **Fig. 5A** depicts the longitudinal cross-section of a reactor tank **502** comprising one or more liquid inlets **504** and one or more liquid outlets **506.** The reactor tank has a longitudinal (cylindrical) shape comprising a closed cylindrical body having a first base side **505** and a second base side **507.** Typical dimensions of the tank are 1 to 6 meters in the longitudinal direction and a radial diameter of the base between 0,5 and 5 meters, preferably between 1 and 4 meters. As will be discussed hereunder in detail the ratio between the diameter of the base and the length of the cylindrical body may be between 1:1,3 and 1:3, preferably between 1:1.5 and 1:2. A plurality of tubular UV lamp assemblies **516** (similar to those described with reference to **Fig. 1-4**) are mounted in the longitudinal direction of the reactor tank.

A pumping system **508** pumps the untreated fluid under pressure via a pipe system to one or more inlets which each may comprise at least one spray nozzle for injecting the untreated contaminated mixed with an UV-activatable oxidation agent, being hydrogen peroxide, under force in the reactor tank that is filled with the fluid and the UV-activatable oxidation agent. An oxidation agent release system **510** comprising a container **512** comprising the oxidation agent is connected via a controllable valve **514** to the pipe system in order to controllably release and mix a predetermined amount of oxidation agent into the pipe system that leads to the one or more inlets of the reactor tank.

The one or more inlets are mounted in the first base side of the reactor tank within an area close to the central (longitudinal) axis **522** of the cylindrical reactor tank. Then the pumping system may be controlled to inject the liquid with force (under high pressure) via the one or more spray nozzles into the tank in order to form a first flow volume **518** round the central axis of the reactor tank (a first flow region indicated by the dark grey area). In this first flow volume, the fluid will flow with a relatively high flow rate in a direction parallel to the longitudinal axis of the reactor tank towards the second base side of the reactor tank (indicated by the white arrows in the first flow area) while the fluid mixed with the UV-activatable oxidation agent is exposed to the UV light originating from UV light sources that are positioned substantially within the first flow volume.

At the second base side the fluid in the first flow volume will be forced to move away from the longitudinal axis parallel to the base side towards the cylindrical surface of the reactor tank where it is forced to return in a direction that is opposite to the average flow direction in the first flow volume. Here, the fluid will enter a second flow volume **520** (a second flow region indicated by the light grey area) formed around the first flow volume. In this second flow volume liquid flows back - parallel to the cylindrical surface - to the first base side of the tank (indicated by the white arrows in the second flow volume that point towards the first base side). At the first base side the fluid will leave the reactor via the one or more outlets in the first base side.

The volume of the second flow volume will be larger than the volume of the first flow volume so that the flow rate in the second flow volume will be lower than the flow rate in the first flow volume. Further, due to the differences in flow rates, vortices **521,523** will appear in the second flow volume causing part of the fluid in the reactor to (re)circulate (as indicated by the white arrows in the second flow area that point towards the first flow volume). This recirculation effect in the reactor will be particular advantageous when the ratio between the diameter of the base and the length of the cylindrical body are selected between 1:1,3 and 1:3 preferably between 1:1,5 and 1:2. In order to provide predictable behaviour of the fluid in the reactor tank, the injection speed of the fluid in to the tank should not exceed 10 m/s.

In the second flow volume the fluid mixed with UV-activatable oxidation agent will be exposed to the UV light originating from UV light sources that are positioned within the second flow volume. Due to the slower flow rate and the recirculation in the second flow volume, the average UV intensity produced by the UV light sources in the second flow area may be set lower than the average UV intensity of the UV light sources produced by the UV light sources in the first flow area.

**Fig. 5B** depicts a radial cross-section of the reactor tank showing that within the first flow volume **518** the amount of UV light sources per volume unit is higher than the amount of light sources per volume unit in the second flow volume **520.** This way the UV intensity in the first flow volume may be higher than the UV intensity in the second flow volume. The UV light intensity in the first flow volume may be set between 2 - 4 times the intensity of the second flow volume. This way on average, the UV absorption in the first and second flow volumes may be set to similar values.

The photo-reactor design of **Fig. 5A** and **5B** can be optimized for different sizes and thus provides a solution that is scalable. Reactors of different sizes can be realized while maintaining its advantageous properties. Nozzles located on or close to centre of the first base for injecting the fluid with force in the reactor can be used to generate an advantageous flow pattern for photo-oxidation on the basis of hydrogen peroxide within the reactor without the use of baffles or the like. The design of **Fig. 5A** and **5B** further provides the advantages that both the inlet, the outlet and the UV light sources are accessible at one base side of the reactor tank. This allows efficient arrangement of multiple tanks for example in case multiple tanks need to be aligned connected in series.

## Claims

1. UV photo-oxidation system for oxidizing contaminates in a contaminated fluid on the basis of hydrogen peroxide comprising:
a cylindrical housing (502) for containing a contaminated fluid, the housing (502) comprising a first base side (505) and a second base side (507), the first base side (505) and second base side (507) forming two opposite ends of the housing (502); said housing comprising a main inlet (504) and an outlet (506) both at the first base side (505), said main inlet (504) being located on or close to the centre of the first base side (505);
a plurality of tube-shaped UV light sources (516) mounted in said housing (502), the longitudinal axis of each of the plurality of tube-shaped UV light sources (516) arranged substantially parallel to the longitudinal axis (522) of the cylindrical housing (502);
the plurality of tube-shaped UV light sources (516) including a first set of UV sources (516) mounted close to the longitudinal axis (522) of the housing (502) and a second set of UV sources (516) mounted away from the longitudinal axis (522), wherein, when in use, the first set of UV light sources (516) form a first region (518) in said housing (502) of a first average UV light intensity and the second set of UV light sources (516) form a second region (520) of a second average UV light intensity arranged around the first region (518);
a pumping system (508) connected via a pipe system to the inlet (504) for pumping a contaminated fluid under force in said housing (502);
an oxidation agent release system (510) including a container (512) comprising hydrogen peroxide connected via a controllable valve (514) to said pipe system for mixing hydrogen peroxide with the contaminated fluid before the fluid is injected into the housing (502) via the inlet (504);
wherein the main inlet (504) comprises a nozzle for injecting the mixture of hydrogen peroxide and the contaminated fluid under high pressure into the cylindrical housing (502) in a direction towards the second base side (507).

2. System according to claim 1 wherein the nozzle comprises a spray head (402), preferably said spray head being configured to move and/or rotate when fluid is pumped under pressure out of the spray head (402).

3. System according to any of claims 1-2 wherein the main nozzle is configured to release one or more fluid jets or spray jets under high-pressure in the direction towards at least part of the plurality of UV light sources (516).

4. System according to any of claims 1-3 wherein the system further comprises a recirculation system (114) for reinjecting at least part of the fluid leaving the outlet (506) of the cylindrical housing (502) into the cylindrical housing (502), the recirculation system being connected to the main inlet (504) and/or one or more nozzles for re-injecting at least part of the fluid into the cylindrical housing (502).

5. System according to any of claims 1-4 wherein the first average UV light intensity in the first region (518) is higher than the second average UV light intensity in the second region (520).

6. System according to claim 5 wherein, when in use, said pumping system (508) and the nozzle is configured to generate: a first flow volume in the first region (518) and a second flow volume in the second region (520), the average flow direction in the first flow volume is towards the second base side (507), parallel to the longitudinal axis (522) of said housing (502); and, the average flow direction in the second flow volume is towards the first base side (505).

7. System according to claim 6 wherein the pumping system (508) and the nozzle are configured to produce an average first flow rate in the first flow volume that is larger than the average second flow rate in the second flow volume

8. System according to any of claims 5-7 wherein the ratio between the diameter of the first base side (505) and second base side (507) and longitudinal length of the cylindrical body (502) is selected between 1:1,2 and 1:3.

## Patentansprüche

1. UV-Photooxidationssystem zum Oxidieren von Verunreinigungen in einem verunreinigten Fluid auf Basis von Wasserstoffperoxid, aufweisend:
ein zylindrisches Gehäuse (502) zur Aufnahme eines verunreinigten Fluids, wobei das Gehäuse (502) eine erste Basisseite (505) und eine zweite Basisseite (507) aufweist, die erste Basisseite (505) und die zweite Basisseite (507) zwei sich gegenüberliegende Enden des Gehäuses (502) bilden; wobei das Gehäuse einen Haupteinlass (504) und einen Auslass (506), beide an der ersten Basisseite (505), aufweist, der Haupteinlass (504) an oder nahe an der Mitte der ersten Basisseite (505) angeordnet ist;
mehrere röhrenförmige UV-Lichtquellen (516), die in dem Gehäuse (502) angebracht sind, wobei die Längsachse jeder der mehreren röhrenförmigen UV-Lichtquellen (516) im Wesentlichen parallel zu der Längsachse (522) des zylindrischen Gehäuses (502) angeordnet ist; wobei die mehreren röhrenförmigen UV-Lichtquellen (516) einen nahe an der Längsachse (522) des Gehäuses (502) angeordneten ersten Satz UV-Quellen (516) und einen weiter weg von der Längsachse (522) angeordneten zweiten Satz UV-Quellen (516) aufweisen, wobei in Gebrauch der erste Satz UV-Lichtquellen (516) einen ersten Bereich (518) in dem Gehäuse (502) bildet, der eine erste durchschnittliche UV-Lichtintensität hat, und der zweite Satz UV-Lichtquellen (516) einen zweiten Bereich (520) bildet, der um den ersten Bereich (518) herum angeordnet ist und eine zweite durchschnittliche UV-Lichtintensität hat;
ein Pumpsystem (508), das über ein Rohrsystem mit dem Einlass (504) verbunden ist, um verunreinigtes Fluid unter Zwang in das Gehäuse (502) zu pumpen;
ein Oxidationsmittel-Freigabesystem (510), das einen Behälter (512) mit Wasserstoffperoxid aufweist, der über ein steuerbares Ventil (514) mit dem Rohrsystem verbunden ist, um Wasserstoffperoxid mit der verunreinigten Fluid zu mischen, bevor die Fluid über den Einlass (504) in das Gehäuse (502) injiziert wird;
wobei der Haupteinlass (504) aufweist: eine Düse zum Injizieren des Gemisches aus Wasserstoffperoxid und verunreinigtem Fluid unter hohem Druck in das zylindrische Gehäuse (502) in eine Richtung hin zur zweiten Basisseite (507).

2. System nach Anspruch 1, wobei die Düse einen Sprühkopf (402) aufweist, der Sprühkopf vorzugsweise konfiguriert ist, sich zu bewegen und/oder zu drehen, wenn Fluid unter Druck aus dem Sprühkopf (402) herausgepumpt wird.

3. System nach einem der Ansprüche 1 bis 2, wobei die Hauptdüse konfiguriert ist, einen oder mehrere Fluidsstrahlen oder Sprühstrahlen unter hohem Druck in Richtung hin zu mindestens einem Teil der mehreren UV-Lichtquellen (516) freizusetzen.

4. System nach einem der Ansprüche 1 bis 3, wobei das System ferner ein Rezirkulationssystem (114) aufweist, um mindestens einen Teil der Fluid, die den Auslass (506) des zylindrischen Gehäuses (502) verlässt, in das zylindrische Gehäuse (502) zurück zu injizieren, wobei das Rezirkulationssystem mit dem Haupteinlass (504) und/oder einer oder mehreren Düsen zum Zurückinjizieren mindestens eines Teils der Fluid in das zylindrische Gehäuse (502) verbunden ist.

5. System nach einem der Ansprüche 1 bis 4, wobei die erste durchschnittliche UV-Lichtintensität in dem ersten Bereich (518) höher als die zweite durchschnittliche UV-Lichtintensität in dem zweiten Bereich (520) ist.

6. System nach Anspruch 5, wobei in Gebrauch das Pumpsystem (508) und die Düse konfiguriert sind, ein erstes Durchflussvolumen in dem ersten Bereich (518) und ein zweites Durchflussvolumen in dem zweiten Bereich (520) zu erzeugen, wobei die durchschnittliche Durchflussrichtung in dem ersten Durchflussvolumen hin zur zweiten Basisseite (507) parallel zu der Längsachse (522) des Gehäuses (502) ist; und die durchschnittliche Durchflussrichtung in dem zweiten Durchflussvolumen hin zur ersten Basisseite (505) ist.

7. System nach Anspruch 6, wobei das Pumpsystem (508) und die Düse konfiguriert sind, eine durchschnittliche erste Durchflussrate in dem ersten Durchflussvolumen zu erzeugen, die höher als die durchschnittliche zweite Durchflussrate in dem zweiten Durchflussvolumen ist.

8. System nach einem der Ansprüche 5 bis 7, wobei das Verhältnis zwischen dem Durchmesser der ersten Basisseite (505) und zweiten Basisseite (507) und einer Länge des zylindrischen Körpers (502) in Längsrichtung zwischen 1:1,2 und 1:3 gewählt ist.

## Revendications

1. Système de photo-oxydation par UV pour oxyder des contaminants dans un fluide contaminé à base de peroxyde d'hydrogène comprenant :
un logement (502) cylindrique pour contenir un fluide contaminé, ledit logement (502) comprenant un premier côté de base (505) et un second côté de base (507), le premier côté de base (505) et le second côté de base (507) formant deux extrémités opposées du logement (502) ; ledit logement comprenant une entrée (504) principale et une sortie (506) toutes deux au niveau du premier côté de base (505), ladite entrée (504) principale étant située sur le ou à proximité du centre du premier côté de base (505) ;
une pluralité de sources de lumière UV (516) en forme de tube montées dans ledit logement (502), l'axe longitudinal de chacune de la pluralité de sources de lumière UV (516) en forme de tube étant agencé sensiblement parallèle à l'axe longitudinal (522) du logement (502) cylindrique ;
la pluralité de sources de lumière UV (516) en forme de tube incluant un premier ensemble de sources UV (516) monté à proximité de l'axe longitudinal (522) du logement (502) et un second ensemble de sources UV (516) monté à l'écart de l'axe longitudinal (522),
dans lequel, quand il est utilisé, le premier ensemble de sources de lumière UV (516) forme une première région (518) dans ledit logement (502) d'une première intensité moyenne de lumière UV et le second ensemble de sources de lumière UV (516) forme une seconde région (520) d'une seconde intensité moyenne de lumière UV agencée autour de la première région (518) ;
un système de pompage (508) connecté via un système de tuyaux à l'entrée (504) pour pomper un fluide contaminé sous une force dans ledit logement (502) ;
un système de libération d'agent d'oxydation (510) incluant un récipient (512) comprenant du peroxyde d'hydrogène connecté via une vanne commandable (514) audit système de tuyaux pour mélanger le peroxyde d'hydrogène avec le fluide contaminé avant que le fluide ne soit injecté dans le logement (502) via l'entrée (504) ;
dans lequel l'entrée (504) principale comprend une buse pour injecter le mélange de peroxyde d'hydrogène et du fluide contaminé sous haute pression dans le logement (502) cylindrique dans une direction vers le second côté de base (507).

2. Système selon la revendication 1, dans lequel la buse comprend une tête de pulvérisation (402), de préférence ladite tête de pulvérisation étant conçue pour se déplacer et/ou tourner quand un fluide est pompé sous pression hors de la tête de pulvérisation (402).

3. Système selon l'une quelconque des revendications 1 et 2, dans lequel la buse principale est conçue pour libérer un ou plusieurs jets de fluide ou jets de pulvérisation sous haute pression dans la direction vers au moins une partie de la pluralité de sources de lumière UV (516).

4. Système selon l'une quelconque des revendications 1 à 3, dans lequel le système comprend en outre un système de recirculation (114) pour réinjecter au moins une partie du fluide quittant la sortie (506) du logement (502) cylindrique dans le logement (502) cylindrique, le système de recirculation étant connecté à l'entrée (504) principale et/ou à une ou plusieurs buses pour réinjecter au moins une partie du fluide dans le logement (502) cylindrique.

5. Système selon l'une quelconque des revendications 1 à 4, dans lequel la première intensité moyenne de lumière UV dans la première région (518) est supérieure à la seconde intensité moyenne de lumière UV dans la seconde région (520).

6. Système selon la revendication 5, dans lequel, quand il est utilisé, ledit système de pompage (508) et la buse sont conçus pour générer : un premier volume d'écoulement dans la première région (518) et un second volume d'écoulement dans la seconde région (520), la direction d'écoulement moyenne dans le premier volume d'écoulement est vers le second côté de base (507), parallèlement à l'axe longitudinal (522) dudit logement (502) ; et, la direction d'écoulement moyenne dans la seconde volume d'écoulement est vers le premier côté de base (505).

7. Système selon la revendication 6, dans lequel ledit système de pompage (508) et la buse sont conçus pour produire un premier débit moyen dans le premier volume d'écoulement qui est supérieur au second débit moyen dans le second volume d'écoulement.

8. Système selon l'une quelconque des revendications 5 à 7, dans lequel le rapport entre le diamètre des premier côté de base (505) et second côté de base (507) et la longueur longitudinale du corps (502) cylindrique est sélectionné entre 1 : 1,2 et 1 : 3.
